# EUROPÄISCHE PATENTANMELDUNG

(11) **EP 1 909 078 A1**
(43) Veröffentlichungstag der Anmeldung: **09.04.2008**
(21) Anmeldenummer: 07017966.8
(22) Anmeldetag: 13.09.2007
(51) Int. Cl.: G01F 23/296

(54) **Piezoelektrisch erregbare Schwingvorrichtung**

(30) Priorität: 28.09.2006 DE 102006046251
(71) Anmelder: VEGA Grieshaber KG, 77709 Wolfach (DE)
(72) Erfinder: Wöhrle, Siegbert, 77761 Schiltach (DE); Ohmayer, Gerd, 77716 Haslach (DE)
(74) Vertreter: Patentanwälte Westphal, Mussgnug & Partner

(57) **Zusammenfassung**

Die Erfindung bezieht sich auf eine piezoelektrisch erregbare Schwingvorrichtung, insbesondere Füllstand- oder Grenzstand-Messvorrichtung. Ausgegangen wird von einer piezoelektrisch erregbaren Schwingvorrichtung mit einer in Schwingung erregbaren Membran (3), einer piezoelektrischen Antriebseinrichtung (7) zum Versetzen der Membran (3) in Schwingung oder zum Übernehmen von Schwingungen der Membran (3) und einer Spanneinrichtung, wobei ein erstes Spannelement (8) der Spanneinrichtung an der Membran (3) befestigt oder einstückig mit der Membran (3) ausgebildet ist und wobei ein zweites Spannelement (9) der Spanneinrichtung ausgebildet ist, in Wechselwirkung mit dem ersten Spannelement (8; 8*) die Antriebseinrichtung (7) relativ zu dem ersten Spannelement (8) gegen die Membran (3) zu spannen. Vorteilhaft wird eine solche Schwingvorrichtung dadurch, dass das erste Spannelement (8) in einem Berührungsbereich, an dem die Antriebseinrichtung (7) gegen die Membran (3) gespannt wird, zumindest teilweise umgreifend an der Membran (3) befestigt ist und das zweite Spannelement (9) die Antriebseinrichtung (7) zumindest teilweise hinter- und/oder umgreifend ausgebildet ist.

## Beschreibung

Die Erfindung bezieht sich auf eine piezoelektrisch erregbare Schwingvorrichtung, insbesondere Füllstand- oder Grenzstand-Messvorrichtung mit den oberbegrifflichen Merkmalen gemäß Patentanspruch 1.

Aus DE 100 23 302 A1 ist eine piezoelektrisch erregbare Schwingvorrichtung bekannt, die eine in Schwingung erregbare Membran, eine piezoelektrische Antriebseinrichtung zum Versetzen der Membran in Schwingung und eine Spanneinrichtung aufweist. Die Spanneinrichtung weist ein erstes Spannelement auf, welches bolzenförmig an der Membran befestigt ist oder einstückig mit der Membran ausgebildet sein kann und in Richtung der Antriebseinrichtung absteht. Dieser Bolzen führt zentral durch eine Öffnung der Antriebseinrichtung hindurch. Außerdem weist die Spanneinrichtung ein zweites Spannelement auf, welches rückseitig mit der durch den Bolzen als Gewindebolzen ausgebildeten ersten Spanneinrichtung verschraubt wird, um die Antriebseinrichtung gegen die Membran zu spannen. Dadurch stehen das erste und das zweite Spannelement derart in Wechselwirkung zueinander, dass die Antriebseinrichtung relativ zu dem ersten Spannelement gegen die Membran spannbar ist. Außerdem weist eine derartige Schwingvorrichtung einen hülsenförmigen Körper auf, welcher um die Antriebseinrichtung herumgeführt ist. Die Antriebseinrichtung in Form meist mehrerer geschichteter Antriebselemente einer solchen Schwingvorrichtung ist somit gemäß einer bislang bevorzugten Ausführungsform über einen an der Membran befestigten Zugbolzen auf die schwingungsfähige Membran gespannt.

Gemäß einer alternativen Ausführungsform kann ein solcher hülsenförmiger Körper, welcher mit dem Außenrand der Membran fest verbunden ist, ein Innengewinde aufweisen, über welches die Antriebseinrichtung mittels eines eingeschraubten Deckelelements gegen die Membran gespannt wird.

Bekannt ist auch, die Antriebselemente auf die schwingungsfähige Membran aufzukleben. Weiterhin ist aus z.B. EP 11 34 038 A1 bekannt, die Antriebselemente über ein Gewinde, welches sich im hinteren Bereich eines von der Schwingvorrichtung wegführenden Einschraubstutzens oder Distanzrohrs befindet, in Richtung eines zu überwachenden bzw. zu messenden Mediums auf die Membran zu drücken. Aus z.B. DE 42 01 360 C2 sind Antriebe bekannt, welche zwischen durch die Membran verlängerte Schwinggabel-Paddel geschraubt werden.

Derartige Möglichkeiten des Aufbaus einer Schwingvorrichtung haben den Nachteil, dass durch auf die Schwingvorrichtung einwirkenden Druck und/oder darauf einwirkende Temperatur und/oder darauf einwirkende mechanische Kraft und/oder darauf einwirkende Feuchtigkeit die mechanische Schwingamplitude gesenkt wird. Verklebte Antriebselemente haben Probleme mit allen genannten Problemfaktoren.

Für Temperaturen über 180°C sind sämtliche am Markt erhältliche Klebstoffe nicht geeignet. Dehnungen der unterschiedlichen Werkstoffe durch Druck, Temperatur und mechanische Belastung können eine derartige Klebeverbindung ablösen oder absprengen.

Die über einen Zugbolzen auf die Membran geschraubten Antriebselemente der Antriebseinrichtung verlieren bei Druckbelastung die mechanische Amplitude, da der Druck bewirkt, dass die Schwingmembran nach hinten verformt wird, der Zugbolzen ebenfalls nach hinten verschoben wird und ein aus den Antriebselementen gebildeter Antriebsstapel somit entlastet wird.

Die über ein rückseitig im Stutzen angebrachtes Gewinde nach vorne auf die Membran geschraubten Antriebseinrichtungen kämpfen vor allem mit der mechanischen Belastung der Schwingvorrichtung. Werden z.B. Gabelzinken der Schwingvorrichtung durch z.B. grobkörniges Schüttgut oder eine sonstige mechanische Belastung auseinander gedrückt, wird auch der Antriebsstapel entlastet und die mechanische Amplitude sinkt. Temperaturwechsel und in das Schwingsystem eindringende Feuchtigkeit sind zwei Probleme, unter denen alle diese obig genannten Antriebsformen ebenfalls Probleme aufweisen.

Ein Problem stellen somit die auf eine Schwingvorrichtung einwirkende Druckbelastung sowie Temperaturwechsel bzw. hohe Temperaturen von auch über 250°C und auch Feuchtigkeit dar. Diese führen in ungünstigen Fällen zu nicht oder fast nicht mehr messbaren mechanischen und elektrischen Amplituden des Schwingsystems.

Die Aufgabe der Erfindung besteht darin, eine piezoelektrisch erregbare Schwingvorrichtung, insbesondere Füllstand- oder Grenzstand-Messvorrichtung derart zu verbessern, dass diese für Parameter wie Druck, Temperatur und Feuchte in kritischen Bereichen weniger anfällig ist. Insbesondere wird nach einer Lösung gesucht, den Antriebsstapel einer Antriebseinrichtung unempfindlich gegen mechanische Belastung und Druckbelastung zu machen und Feuchte möglichst einfach aus dem Antriebselement herauszuhalten.

Diese Aufgabe wird durch eine piezoelektrisch erregbare Schwingvorrichtung mit den Merkmalen gemäß Patentanspruch 1 bzw. durch eine Füllstand- oder Grenzstand-Messvorrichtung mit einer solchen Schwingvorrichtung gelöst. Vorteilhafte Ausgestaltungen sind Gegenstand von abhängigen Ansprüchen.

Bevorzugt wird demgemäss eine piezoelektrisch erregbare Schwingvorrichtung mit einer in Schwingung erregbaren Membran, mit einer piezoelektrischen Antriebseinrichtung zum Versetzen der Membran in Schwingung oder zum Übernehmen von Schwingungen der Membran und mit einer Spanneinrichtung, wobei ein erstes Spannelement der Spanneinrichtung an der Membran befestigt oder einstückig mit der Membran ausgebildet ist, wobei ein zweites Spannelement der Spanneinrichtung ausgebildet ist, in Wechselwirkung mit dem ersten Spannelement die Antriebseinrichtung relativ zu dem ersten Spannelement gegen die Membran zu spannen, und wobei das erste Spannelement in einem Berührungsbereich, an dem die Antriebseinrichtung gegen die Membran gespannt wird, zumindest teilweise umgreifend an der Membran befestigt ist und wobei das zweite Spannelement die Antriebseinrichtung zumindest teilweise hinter- und/oder umgreifend ausgebildet ist. Mit anderen Worten besteht die Spanneinrichtung im Wesentlichen aus einem ersten Spannelement, welches an der Membran befestigt ist und in rückseitiger Richtung von der Membran abstehend derart ausgestaltet ist, dass es die Antriebseinrichtung oder einen vorderseitigen Abschnitt von dieser umgreift, sowie aus einem zweiten Spannelement, welches in Eingriff mit dem ersten Spannelement tritt und dabei die Antriebseinrichtung zwischen den Wandungen des ersten Spannelements hindurch gegen die Membran spannt. Dies ermöglicht ein einfaches Verspannen der Antriebseinrichtung gegen die Membran, wobei die beiden Spannelemente die Antriebseinrichtung zumindest teilweise umgreifen.

Bevorzugt wird eine Schwingvorrichtung, bei welcher das zweite Spannelement und das erste Spannelement über jeweilige Gewinde miteinander verschraubbar sind. Eine Verschraubung ermöglicht eine besonders dichte und vorzugsweise wieder lösbare Verspannung der Antriebseinrichtung gegen die Membran. Außerdem ermöglicht eine Verschraubung eine gegenüber FeuchtigkeitsEintritt dichte Lagerung der Antriebseinrichtung zwischen den Spannelementen und der Membran.

Gemäß einer ersten Ausführungsform wird bevorzugt, wenn das erste Spannelement als Gewinde ein Außengewinde und das zweite Spannelement als Gewinde ein Innengewinde aufweist. Das zweite Spannelement ist entsprechend deckelförmig wie beispielsweise ein Verschlussdeckel einer Getränkeflasche ausbildbar und von der Rückseite her auf das erste Spannelement aufschraubbar.

Bevorzugt wird gemäß einer zweiten Ausführungsform, wenn das erste Spannelement als Gewinde ein Innengewinde und das zweite Spannelement als Gewinde ein Außengewinde aufweist. Bei einer solchen Ausführungsform ist das zweite Spannelement somit als ein vorzugsweise flächiger und kreisförmiger Körper in das entsprechend zylinderförmig ausgebildete Spannelement innenseitig einschraubbar. Auch eine solche Schraubverbindung ermöglicht eine besonders dichte und einfache Verspannung der Antriebseinrichtung gegen die Membran.

Bevorzugt wird, wenn das zweite Spannelement deckelförmig ausgebildet ist. Eine deckelförmige Ausgestaltung ermöglicht ein dichtes Verspannen der Antriebseinrichtung gegen die Membran, so dass in den Raum zwischen den beiden Spannelementen nach deren Verschrauben und gegebenenfalls Abdichten von Kabelöffnungen keine Feuchtigkeit eindringen kann.

Mittels einer Schraubkappe, die als zweites Spannelement über einen das erste Spannelement ausbildenden Gewindering geschraubt wird, wird der Antriebsstapel der Antriebseinrichtung über eine Kugel bzw. ein sphärisches Anlageelement zentrisch auf die Membran gedrückt, wo bisher der Zugbolzen an der Membran angegossen oder aufgeschweißt war. Alternativ vorteilhaft ist als zweites Spannelement ein eingeschraubtes Druckstück gemäß der zweiten Ausführungsform. Einzigster Nachteil wäre nur die höhere Bauhöhe gegenüber der ersten Ausführungsform.

Bevorzugt wird eine derartige Schwingvorrichtung, bei welcher sich das erste Spannelement von der Membran aus wegführend seitlich der Antriebseinrichtung erstreckt. Bevorzugt wird dabei, wenn das erste Spannelement zylinderförmig ausgebildet ist. Eine solche Ausgestaltung eines insbesondere zylinderförmigen ersten Spannelements bildet einen zu den Umfangsseiten und der in Richtung Membran stirnseitigen Wandung der Antriebseinrichtung geschlossenen Raum aus, welcher lediglich rückseitig durch das zweite Spannelement verschlossen werden muss, um die Antriebseinrichtung vor dem nachträglichen Zutritt von Feuchtigkeit schützen zu können.

Im Vergleich zu einem bisherige Aufbau einer Schwingvorrichtung, bei der über einen zentrisch auf der Membran sitzenden und insbesondere daran angegossenen oder aufgeschweißten Zugbolzen eine Antriebseinrichtung über einen Druckring auf die Schwingmembran gedrückt worden ist, wird das vorliegend bevorzugte System umgekehrt aufgebaut. Auf dem bisherigen Durchmesser eines lose aufliegenden Druckringes sitzt nun ein fest angebrachter Gewindering bzw. ein mit an einer Guss-Gabel angegossener oder angeschweißter Gewindering in Form des ersten Spannelements. Die Anbindung dieses ersten Spannelements an die Membran weist bei ersten Versuchen den gleichen Durchmesser wie das bisherige Druckstück auf. Der innere Bereich dieses ersten Spannelements dient vorteilhaft zugleich als Aufnahmegehäuse der piezoelektrischen Antriebseinrichtung.

Bevorzugt wird, wenn die Antriebseinrichtung über ein Anlageelement gegen einen zentralen Abschnitt der Membran drückt. Der Einsatz eines derartigen Anlageelements als Bestandteil oder zusätzliche Komponente der Antriebseinrichtung ermöglicht eine besonders achsnahe Übertragung von Schwingungen zwischen der Antriebseinrichtung und der Membran bzw. in umgekehrter Richtung zwischen der Membran und der Antriebseinrichtung. Vorteilhafterweise kann ein solches als separate Komponente ausgestaltetes Anlageelement auch als elektrisch isolierendes Element ausgebildet werden, um eine elektrische Isolierung zwischen der Antriebseinrichtung und der Membran zu ermöglichen, sofern eine solche gewünscht ist.

Bevorzugt wird insbesondere, wenn die Antriebseinrichtung über ein gekrümmtes, insbesondere teil-kugelförmiges Anlageelement gegen einen Abschnitt der Membran drückt. Besonders vorteilhaft ist eine Kugelform oder Teil-Kugelform als Abschnitt eines Anlageelements oder als eigenständiges Anlageelement zwischen der Antriebseinrichtung und der Membran, da diese Formgebung einen möglichst kleinen Berührungsbereich der Membran und damit eine besonders gute Schwingungsübertragung ermöglicht. In umgekehrter Krümmungsrichtung oder im Fall eines kugelförmigen oder elliptischen Körpers wird der Übertragungspunkt alternativ oder zusätzlich in Richtung der Antriebseinrichtung optimiert.

Eine Druckbelastung der Schwingvorrichtung hat keinerlei Auswirkung auf die mechanische Amplitude der selben, da durch den zentrischen Druckpunkt und die Verschraubung der Antriebseinrichtung direkt auf der Membran zwischen Antriebseinrichtung und Membran keine Entlastung zugelassen wird.

Bevorzugt wird eine derartige Schwingvorrichtung mit zumindest einem an der Membran entgegengesetzt zur Antriebseinrichtung befestigten Schwingkörper. Ein Schwingkörper dient in für sich bekannter Art und Weise zur Verstärkung von Schwingungen, welche von oder zu der Membran übertragen werden.

Besonders bevorzugt wird eine Ausführungsform, bei welcher das erste Spannelement außenseitig weiter vom Rand der Membran beabstandet ist als der auf der gegenüberliegenden Seite der Membran angeordnete Schwingkörper.

Ein Zusammendrücken der Gabelzinken lässt die mechanische Amplitude dadurch nicht sinken bzw. die Antriebseinrichtung nicht entlasten. Das Gegenteil ist der Fall. Ein Auseinanderziehen der Gabeln ist auch lange nicht so kritisch, da der durch das erste Spannelement gebildete Montagering einen relativ kleinen Durchmesser aufweist und deshalb keine so großen Verformungen zulässt, so dass die Antriebseinrichtung komplett entlastet werden würde.

Bevorzugt wird eine solche Schwingvorrichtung mit einem Gehäuse, an welchem stirnseitig die Membran befestigt ist, wobei die Spannelemente und die Antriebseinrichtung zumindest teilweise von einer durchgehenden Gehäuseöffnung rückseitig der Membran aufgenommen sind.

Durch den hermetisch dichten Aufbau mit einem geschlossenen Gewindering in Verbindung mit einer aufgeschraubten Schraubkappe kann keinerlei Feuchtigkeit, die sich schädlich auf einen solchen Piezoantrieb auswirken kann, in die Antriebseinrichtung eindringen. Durch entsprechende Abdichtung von Anschlussöffnungen von Antriebselektroden in der Schraubkappe als zweitem Spannelement und Dichtmittel im Gewinde der Schraubkappe ist die Antriebseinrichtung hermetisch abgeschlossen und unempfindlich gegen Feuchtigkeit. Durch ein entsprechendes Aufnahmegehäuse aus Kunststoff, z.B. PTFE, ist eine Isolation der Bauteile und Elektroden zur metallenen Schwinggabel problemlos durchführbar.

Ermöglicht wird dadurch in der bevorzugtesten Ausgestaltung eine von Temperatur, Druck und Feuchtigkeit unabhängige piezoelektrische Erregung einer Schwingvorrichtung, wobei die Schwingfrequenz der Schwingvorrichtung durch einen Kontakt mit einem Medium beeinflusst sein kann.

Ein Ausführungsbeispiel wird nachfolgend anhand der Zeichnung näher erläutert. Es zeigen:
- Fig. 1: in Schnittdarstellung eine erste Ausführungsform einer bevorzugten piezoelektrisch erregbaren Schwingvorrichtung einer Füllstand-Messvorrichtung und
- Fig. 2: in Schnittdarstellung eine zweite Ausführungsform einer bevorzugten piezoelektrisch erregbaren Schwingvorrichtung einer Füllstand-Messvorrichtung.

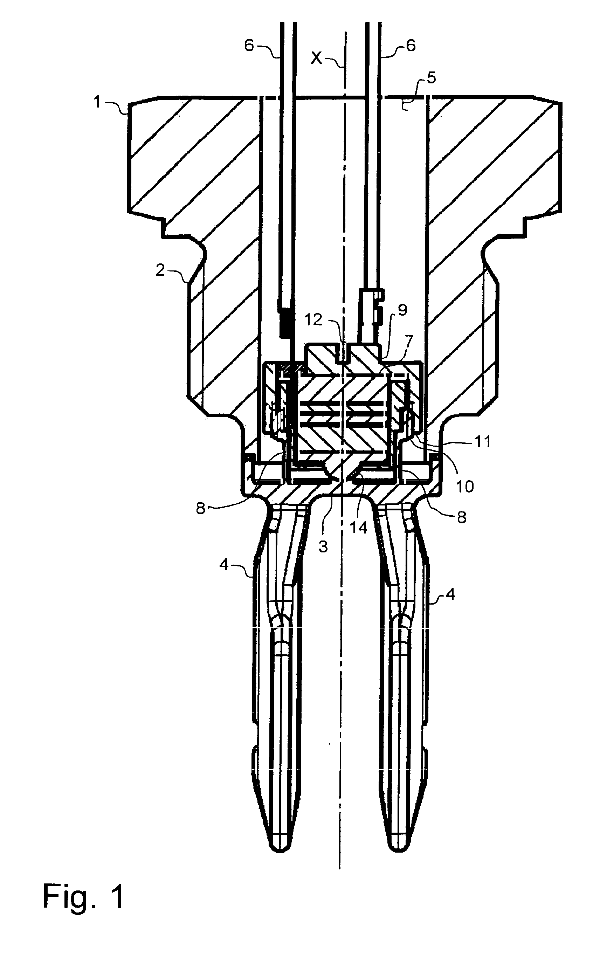

Wie aus Fig. 1 ersichtlich, besteht eine Schwingvorrichtung, welche vorzugsweise als eine Füllstands-Messvorrichtung oder Grenzstands-Messvorrichtung einsetzbar ist, aus einer Vielzahl von Komponenten. Nachfolgend werden im Detail lediglich diejenigen Komponenten beschrieben, welche für das Verständnis der bevorzugten Ausführungsformen von Bedeutung sind. Entsprechend können insbesondere weitere Komponenten und lediglich im Umfeld der Komponenten der bevorzugten Ausführungsformen beschriebene Komponenten in für sich bekannter Art und Weise durch gleichwirkende oder äquivalente Komponenten ersetzt werden.

Üblicherweise weist eine derartige Schwingvorrichtung ein Gehäuse 1 auf, welches in seinem Umfangsbereich ein Gehäusegewinde 2 zum Befestigen der Schwingvorrichtung in einer Gewindebohrung eines Behältnisses aufweist. Stirnseitig des Gehäuses 1 und im eingebauten Zustand in ein derartiges Behältnis hineinragend ist eine in Schwingung erregbare Membran 3 befestigt. Üblicherweise wird die Membran 3 mit einem rückseitig, das heißt in Richtung des Gehäuses 1 als Kragen ausgebildetem Rand an der Stirnseite des Gehäuses 1 befestigt, insbesondere angeschweißt. In Richtung des Behältnisses trägt die Membran 3 einen Schwingkörper 4, welcher beispielsweise als Schwinggabel ausgebildet ist. Der Schwingkörper 4 ist üblicherweise fest an der Membran 3 befestigt, insbesondere an dieser angeschweißt. Prinzipiell ist aber auch eine einteilige Ausgestaltung von Schwingkörper 4 und Membran 3 möglich. Rückseitig der Membran 3 ist eine Gehäuseöffnung 5 durch das Gehäuse 1 hindurchgeführt, um von einer Außenseite her weitere Komponenten in dem Gehäuse 1 aufnehmen zu können und Anschlusskabel 6 von einer Antriebseinrichtung 7 nach außen führen zu können. Die Antriebseinrichtung 7 besteht bei dem dargestellten Ausführungsbeispiel beispielhaft aus einem so genannten 1-Piezo-Antrieb, kann jedoch auch in anderer insbesondere für sich bekannter Art und Weise ausgestaltet werden. Üblicherweise ist eine solche Antriebseinrichtung 7 selber aus einer Vielzahl von einzelnen Komponenten gebildet, welche als ein Antriebsstapel aus Elektroden und piezoelektrischen Schwingelementen um eine zentrale Achse X herum angeordnet sind. Die zentrale Achse X führt vorzugsweise zentral in Längsrichtung von außen nach innen durch das Gehäuse 1 und die Membran 3, wobei auch der oder die Schwingkörper 4 vorzugsweise gleich beabstandet um die zentrale Achse X herum angeordnet sind.

Um Schwingungen der Antriebseinrichtung 7 auf die Membran 3 übertragen zu können oder Schwingungen von der Membran 3 auf die Antriebseinrichtung 7 übertragen zu können, welche in üblicher Art und Weise implizit auch eine Empfangseinrichtung ausbildet, wird die Antriebseinrichtung 7 gegen die Membran 3 gespannt. Das Spannen der Antriebseinrichtung 7 gegen die Membran 3 wird durch eine Spanneinrichtung ermöglicht, welche insbesondere aus einem ersten und einem zweiten Spannelement 8, 9 ausgebildet ist.

Das erste Spannelement 8 ist rückseitig, das heißt in die Gehäuseöffnung 5 hineinragend, an der Membran 3 befestigt. Die Befestigung kann insbesondere durch eine Schweißverbindung erfolgen. Möglich ist alternativ_auch eine einteilige Ausbildung von Membran 3 und der ersten Spanneinrichtung 8. Die Spanneinrichtung 8 ist dabei so ausgebildet, dimensioniert und angeordnet, dass sie von der zentralen Achse X beabstandet angeordnet ist. Gemäß einer besonders bevorzugten Ausführungsform ist die Spanneinrichtung 8 als ein rückseitig von der Membran 3 abstehender oder daran befestigter zylindrischer Körper ausgebildet.

Am außenseitigen Umfang des ersten Spannelements 8 ist insbesondere in dessen rückseitigem Abschnitt ein Außengewinde 10 ausgebildet, welches ein Aufschrauben des deckelförmig mit einem Innengewinde 11 ausgebildeten zweiten Spannelements 9 ermöglicht. Das zweite Spannelement 9 weist in rückseitiger Richtung, das heißt in die Gehäuseöffnung 5 zur Außenseite des Gehäuses 1 weisend, einen Schlitz 12 auf, welcher das Einsetzen eines Schraubendrehers zum Aufschrauben des zweiten Spannelements 9 auf das erste Spannelement 8 unterstützt. Jedoch können auch beliebige andersartige Ausgestaltungen zum Unterstützen eines Aufschraubens vorgesehen werden. Zum Durchführen der Anschlusskabel 6 weist das deckelförmig ausgebildete zweite Spannelement 9 eine oder mehrere Kabelöffnungen 13 auf.

Zur Isolierung der Rückseite der Antriebseinrichtung 7 kann das zweite Spannelement 9 aus einem Kunststoffmaterial ausgebildet sein. Prinzipiell ist aber auch eine Ausgestaltung aus einem elektrisch leitfähigen Metall möglich, wobei dann vorzugsweise zwischen der Innenseite des zweiten Spannelements und der Rückseite der Antriebseinrichtung 7 ein elektrisch nicht-leitfähiges Material eingesetzt wird.

Vorteilhaft ermöglicht eine solche Ausgestaltung eine hermetische Abdichtung der Antriebseinrichtung 7 gegenüber äußeren Einflüssen, da die erste Spanneinrichtung 8 und die zweite Spanneinrichtung 9 als zylinderförmiger bzw. deckelförmiger Körper die Antriebseinrichtung 7 zwischen sich und der Membran 3 dicht einschließen. Vorzugsweise werden entsprechend die Kabelöffnungen 13 nach dem Durchführen der Anschlusskabel 6 entsprechend mit einer Dichtungsmasse abgedichtet, so dass auch durch die Kabelöffnung 13 bzw. Kabelöffnungen keine Feuchtigkeit in den Bereich der Antriebseinrichtung 7 eindringen kann.

Um eine achsnahe Übertragung von Schwingungen zwischen der Antriebseinrichtung 7 und der Membran 3 zu ermöglichen, ist zwischen der Antriebseinrichtung 7 und der Membran 3 ein Anlageelement 14 angeordnet. Dieses kann beispielsweise bolzenförmig zwischen der Antriebseinrichtung 7 und der Membran 3 angeordnet sein. Besonders bevorzugt werden jedoch Ausgestaltungen, bei denen das Anlageelement 14 oder ein von diesem in Richtung der Membran 3 abstehendes Element teil-kugelförmig oder in sonstiger Form gekrümmt bzw. sphärisch ausgestaltet ausgebildet ist. Dadurch wird eine Schwingungsübertragung längs der zentralen Achse X zwischen der Antriebseinrichtung 7 und der Membran 3 vorteilhaft ermöglicht.

Gemäß alternativer Ausgestaltungen kann auch von der Membran 3 in Richtung der Antriebseinrichtung 7, das heißt in umgekehrt gekrümmter Richtung, ein derartiges Anlageelement vorgesehen sein. Als weitere beispielhafte Alternative kann ein kugelförmiger Körper oder elliptischer Körper zwischen der Antriebseinrichtung 7 und der Membran 3 im Bereich der zentralen Achse X vorteilhaft eingesetzt werden, um Schwingungen zwischen diesen zu übertragen.

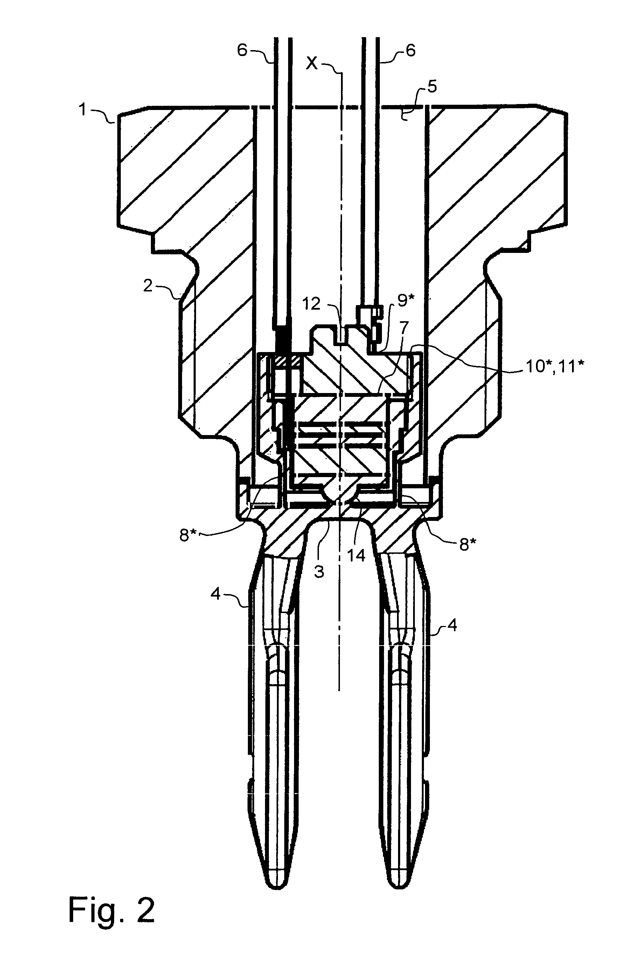

Gemäß einer anhand Fig. 2 dargestellten Ausführungsform wird eine dazu alternative Ausgestaltung der Spanneinrichtung beschrieben. Allgemein wird bezüglich der weiteren Komponenten auf die Ausführungen bezüglich der Ausführungsform gemäß Fig. 1 verwiesen.

Die Spanneinrichtung besteht ebenfalls aus einem ersten und einem zweiten Spannelement 8*, 9*. Im Unterschied zu der ersten Ausführungsform weist das erste Spannelement 8* der zweiten Ausführungsform jedoch ein Innengewinde 10* als das Gewinde und das zweite Spannelement 9* entsprechend ein Außengewinde 11* als das Gewinde auf. Wie gemäß der ersten Ausführungsform sind somit auch gemäß der zweiten Ausführungsform das erste und das zweite Spannelement 8*, 9* miteinander verschraubbar, wobei das zweite Spannelement 9* als im Wesentlichen flächiges und kreisförmiges Element in den zylindrischen Körper des ersten Spannelements 8* rückseitig eingeschraubt wird.

Gemäß weiterer beispielhafter Ausführungsformen, welche zeichnerisch nicht dargestellt sind, sind auch andere Spannmechanismen zum Verspannen des ersten und des zweiten Spannelements möglich. Beispielsweise können eine Rastverbindung mit einem oder mehreren Rastzähnen an einem der Spannelemente und entsprechenden Nuten zur Aufnahme der Rastzähne an dem anderen der Spannelemente anstelle von Gewinden vorgesehen werden.

Möglich ist auch die Ausbildung insbesondere des ersten Spannelements aus zwei oder mehr von der Membran wegragenden Stegen anstelle eines zylindrischen Körpers.

Das zweite Spannelement muss auch nicht zwingend topfförmig oder in Form einer geschlossenen Deckelplatte ausgebildet sein. So kann das zweite Spannelement z.B. mit einem vollständigen oder teilweisen Ringumfang und innerhalb des Ringumfangs einer speichenartigen Verstrebung ausgebildet sein. Auch muss das zweite Spannelement nicht zwingend die Rückseite der Antriebseinrichtung umgreifen. Möglich ist z.B. auch eine Ausgestaltung, bei der das zweite Spannelement seitlich von einem Antriebseinrichtungsblock abstehende Vorsprünge hintergreift.

Der Aufbau ist ohne Probleme nicht nur wie dargestellt als 1-Piezo-Antrieb, sondern auch als Mehrfach-Piezo-Antrieb, insbesondere als 2-Piezo-Antrieb ausgestaltbar.

## Patentansprüche

1. Piezoelektrisch erregbare Schwingvorrichtung mit
- einer in Schwingung erregbaren Membran (3),
- einer piezoelektrischen Antriebseinrichtung (7) zum Versetzen der Membran (3) in Schwingung oder zum Übernehmen von Schwingungen der Membran (3) und
- einer Spanneinrichtung, wobei ein erstes Spannelement (8; 8*) der Spanneinrichtung an der Membran (3) befestigt oder einstückig mit der Membran (3) ausgebildet ist und wobei ein zweites Spannelement (9; 9*) der Spanneinrichtung ausgebildet ist, in Wechselwirkung mit dem ersten Spannelement (8; 8*) die Antriebseinrichtung (7) relativ zu dem ersten Spannelement (8; 8*) gegen die Membran (3) zu spannen,
**dadurch gekennzeichnet, dass**
- das erste Spannelement (8; 8*) in einem Berührungsbereich, an dem die Antriebseinrichtung (7) gegen die Membran (3) gespannt wird, zumindest teilweise umgreifend an der Membran (3) befestigt ist und
- das zweite Spannelement (9; 9*) die Antriebseinrichtung (7) zumindest teilweise hinter- und/oder umgreifend ausgebildet ist.

2. Schwingvorrichtung nach Anspruch 1, bei welcher das zweite Spannelement (9; 9*) und das erste Spannelement (8; 8*) über jeweilige Gewinde miteinander verschraubbar sind.

3. Schwingvorrichtung nach Anspruch 2, bei welcher das erste Spannelement (8) als das Gewinde ein Außengewinde (10) aufweist und das zweite Spannelement (9) als das Gewinde ein Innengewinde (11) aufweist.

4. Schwingvorrichtung nach Anspruch 2, bei welcher das erste Spannelement (8*) als das Gewinde ein Innengewinde (10*) aufweist und das zweite Spannelement (9*) als das Gewinde ein Außengewinde (11*) aufweist.

5. Schwingvorrichtung nach Anspruch 3 oder 4, bei welcher das zweite Spannelement (9; 9*) deckelförmig ausgebildet ist.

6. Schwingvorrichtung nach einem vorstehenden Anspruch, bei welcher sich das erste Spannelement (8; 8*) von der Membran (3) aus wegführend seitlich der Antriebseinrichtung (7) erstreckt.

7. Schwingvorrichtung nach Anspruch 6, bei welcher das erste Spannelement (8; 8*) zylinderförmig ausgebildet ist.

8. Schwingvorrichtung nach einem vorstehenden Anspruch, bei welcher die Antriebseinrichtung (7) über ein Anlageelement (14) gegen einen zentralen Abschnitt der Membran (3) drückt.

9. Schwingvorrichtung nach einem vorstehenden Anspruch, bei welcher die Antriebseinrichtung (7) über ein gekrümmtes, insbesondere teil-kugelförmiges Anlageelement (14) gegen einen Abschnitt der Membran (3) drückt.

10. Schwingvorrichtung nach einem vorstehenden Anspruch mit zumindest einem an der Membran (3) entgegengesetzt zur Antriebseinrichtung (7) befestigten Schwingkörper (4).

11. Schwingvorrichtung nach Anspruch 10, bei welcher das erste Spannelement (8; 8*) außenseitig weiter vom Rand der Membran (3) beabstandet ist als der auf der gegenüberliegenden Seite der Membran (3) angeordnete Schwingkörper (4).

12. Schwingvorrichtung nach einem vorstehenden Anspruch als Komponente einer Füllstands-Messvorrichtung oder Grenzstands-Messvorrichtung.

13. Schwingvorrichtung nach einem vorstehenden Anspruch mit einem Gehäuse (1), an welchem stirnseitig die Membran (3) befestigt ist, wobei die Spannelemente (8, 9; 8*, 9*) und die Antriebseinrichtung (7) zumindest teilweise von einer durchgehenden Gehäuseöffnung (5) rückseitig der Membran (3) aufgenommen sind.
